# EUROPEAN PATENT SPECIFICATION

(11) **EP 2 076 999 B1**
(45) Date of publication and mention of the grant of the patent: **26.09.2012**
(21) Application number: 07826863.8
(22) Date of filing: 27.09.2007
(51) Int. Cl.: G06Q 30/00, H04L 29/08, G06F 17/30

(54) **NETWORK SERVICE USAGE MANAGEMENT SYSTEMS AND METHODS**
SYSTEME UND VERFAHREN ZUR VERWALTUNG DER VERWENDUNG VON NETZDIENSTEN
SYSTÈMES ET PROCÉDÉS DE GESTION D'UTILISATION DE SERVICES EN RÉSEAU

(30) Priority: 13.10.2006 US 549149
(43) Date of publication of application: 08.07.2009
(60) Divisional application: 11177510.2
(73) Proprietor: Alcatel Lucent, 75007 Paris (FR)
(72) Inventor: STRUB, Lyle, Ottawa, Ontario K2C 2G2 (CA); SERGHI, Laura Mihaela, Ottawa, Ontario K1V 9Y8 (CA); YOA, Ming Yu, Kanata, Ontario K2M 2S9 (CA)
(74) Representative: Sciaux, Edmond
(86) International application number: PCT/IB2007/054340
(87) International publication number: WO 2008/044225

(56) References cited:
- WO-A-02/103570
- US-A1- 2002 091 639
- US-A1- 2004 193 703
- US-A1- 2005 160 296

## Description

### Cross-Reference to Related Applications

The present patent application is related to each of the following patent applications:
United States Provisional Patent Application Serial No. 60/815,134, entitled "SECURE DOMAIN INFORMATION PROTECTION APPARATUS AND METHODS", and filed on June 20, 2006, and United States Utility Patent Application US2007/0294523, filed on August 25, 2006 and claiming the benefit thereof;
United States Provisional Patent Application Serial No. 60/814,983, entitled "NETWORK SERVICE PERFORMANCE MONITORING APPARATUS AND METHODS", and filed on June 20, 2006, and United States Utility Patent Application Serial No. US2007/0294399, filed on November 7, 2006 and claiming the benefit thereof;
United States Provisional Patent Application Serial No. 60/815,099, entitled "COMMUNICATION NETWORK APPLICATION ACTIVITY MONITORING AND CONTROL", and filed on June 20. 2006, and United States Utility Patent Application US2007/0294209, filed on July 28, 2006 and claiming the benefit thereof;
United States Provisional Patent Application Serial No. 60/814,963, entitled "SECURE COMMUNICATION NETWORK USER MOBILITY APPARATUS AND METHODS", and filed on June 20, 2006, and United States Utility Patent Application US2007/0293210, filed on August 17, 2006 and claiming the benefit thereof.

### Field of the Invention

This invention relates generally to network services and, in particular, to managing the usage of network services.

### Background

Inter-business application or service integration has long been an important task for corporations in some vertical market segments. In general, services for which information is distributed through a communication network may be referred to as network services. "Web services" are an example of network services, and represent the next generation of technology being used for automatically exchanging information between different applications over the public Internet and many private networks. Web services provide a framework for building web-based distributed applications, and can provide efficient and effective automated machine-to-machine communications.

From a technology point of view, web services are network accessible functions that can be accessed using standard Internet protocols such as HyperText Transfer Protocol (HTTP), extensible Markup Language (XML), Simple Object Access Protocol (SOAP), etc., over standard interfaces.

The real power of web services technology is in its simplicity. The core technology only addresses the common language and communication issues and does not directly address the onerous task of application integration. Web services can be viewed as a sophisticated machine-to-machine Remote Procedure Call (RPC) technology for interconnecting multiple heterogeneous untrusted systems. Web services take the best of many new technologies by utilizing XML technology for data conversion/transparency and Internet standards such as HTTP and Simple Mail Transfer Protocol (SMTP) for message transport.

One of the primary drivers behind the development and standardization of web services is the ability to facilitate seamless machine-to-machine application-level communications by providing a loose coupling between disparate applications. Such a loose coupling of applications allows applications on different servers to interoperate without requiring a static, inflexible interface between them. Applications using very different technologies can interoperate using standard web services protocols.

However, a corporation may wish to integrate its services with different business partners in different ways. There are no currently available products that allow an enterprise to make network services available to multiple distinct groups of partners or users through a single shared infrastructure. A corporation for which multiple different partner extranet connections are to be maintained, for example, must build each extranet individually. This incurs not only equipment and labor costs for each deployment, but also operational costs of maintaining each separate physical extranet.

There are also no currently available products that allow enterprises to participate in both externally managed service networks and self-managed extranets. Currently, participation in a managed service offering provided by a service network requires infrastructure that is dedicated to that service network.

Virtual Private Network (VPN) gateways may support multiple secure connections, but have no notion of partner or user groups and have no ability to differentiate services and usage policies for various groups. For example, VPN gateways do not allow network services to be published for private consumption by members of partner or user groups, subject to group-specific policies. Establishing a secure connection with a partner through a VPN gateway, using Secure Sockets Layer (SSL) for instance, would be only the first, most basic step in this process.

One currently available Service Oriented Architecture (SOA) software product provides certificate-based security with partners, but it does not have any notion of partner groups, group-based policies or enforcement of such policies, or infrastructure peering with any service provider to support participation in a managed service offering.

US2002/0091639 discloses a portal interface service in which users are assigned to membership in groups related to access of specific services and applications. WO02/103570 relates to dynamic user group generation and management.

These documents similarly do not provide for group-based service usage policies.

Thus, there remains a need for improved network service usage management techniques.

### Summary of the Invention

Embodiments of the present invention may allow virtual extranets to be created and managed via a common infrastructure. Such a common infrastructure may be less expensive than multiple dedicated-infrastructure deployments and further allow a corporation to be more agile in their service-level partner interactions.

The same common infrastructure may also allow an enterprise to not only provide locally managed application integration, but also subscribe to managed service offerings without deploying additional equipment. This may result in further cost savings for both deployment and operation. Using a common infrastructure, consistent service management can be applied to both externally managed and self-managed extranet connections.

According to an aspect of the invention, a system is defined according to claim 1.

The network services may include a network service provided by a network service provider system that is within an administrative domain, and the plurality of network service user groups may include a network service user group that includes at least one member that is outside the administrative domain.

The system may be implemented within the administrative domain or in a communication network that is outside the administrative domain and that enables communications between the service provider system and the at least one member that is outside the administrative domain.

For an implementation outside the administrative domain, the interface may enable configuration of the plurality of network service user groups and further enable configuration of associations between the network services and the plurality of network service user groups by enabling the group manager to receive configuration information from a configuration system in the administrative domain.

The respective group policies may include respective sets of at least one of: a network service selection rule, a routing selection rule, and a data privacy rule.

In some embodiments, the system also includes a network service registry system interface operatively coupled to the group manager and operable to enable the group manager to access a registry system. Where the registry system stores network service information for the network services in a plurality of registries that includes respective registries for the plurality of network service user groups, the group manager may be operable to manage the associations between the network services and the plurality of network service user groups by managing the storage of network service information in the plurality of registries.

The system may also include a service usage control module operatively coupled to the group manager and operable to control usage of the network services in accordance with the associations.

A service usage control module may be operatively coupled to the memory and operable to control usage of the network services in accordance with the group policies.

The service usage control module may be located remotely from the group manager.

The interface may enable configuration of an externally managed network service user group and associations between the network services and the externally managed network service user group. In this case, the system may also include an external interface operatively coupled to the group manager and enabling the group manager to send configuration information to an external group manager, implemented outside an administrative domain, that is operable to manage the externally managed network service user group and associations between the network services and the externally managed network service user group.

Another aspect of the invention provides a method is defined according to claim 11.

The network services may include a network service provided by a network service provider system that is within an administrative domain, and the plurality of network service user groups may include a network service user group including at least one member that is outside the administrative domain.

Where the service provider system communicates with the at least one member that is outside the administrative domain via a communication network that is outside the administrative domain, establishing may involve receiving configuration information from a configuration system in the administrative domain.

In some embodiments, configuring associations involves controlling storage of network service information for the network services in a plurality of registries, the plurality of registries including respective registries for the plurality of network service user groups.

The method may also include controlling usage of the network services in accordance with the associations and/or in accordance with group policies.

If the method is implemented within an administrative domain, the method may also involve establishing an externally managed network service user group, configuring associations between the network services and the externally managed network service user group, and sending, to an external group management system that is implemented outside the administrative domain, information that is indicative of the externally managed network service user group and information that is indicative of the associations between the network services and the externally managed network service user group.

Such a method may be embodied, for example, in instructions stored on a machine-readable medium.

A machine-readable medium storing a data structure is also provided. The data structure includes group information that is indicative of a plurality of network service user groups, each network service user group comprising at least one member, and association information that is indicative of associations between network services and the plurality of network service user groups, an association between a network service and a network service user group enabling usage of the network service by each member of the network service user group.

The data structure may also include policy information that is indicative of respective group policies for the plurality of network service user groups, each group policy governing usage, by each member of a network service user group, of network services associated with the network service user group.

Other aspects and features of embodiments of the present invention will become apparent to those ordinarily skilled in the art upon review of the following description.

### Brief Description of the Drawings

Examples of embodiments of the invention will now be described in greater detail with reference to the accompanying drawings.
Fig. 1 is a block diagram of a communication system.
Fig. 2 is a block diagram of a communication system including multiple extranets.
Fig. 3 is a block diagram of a service usage management system.
Fig. 4 is a flow diagram of a network service usage management method.
Fig. 5 is a block diagram of a data structure.

### Detailed Description of Preferred Embodiments

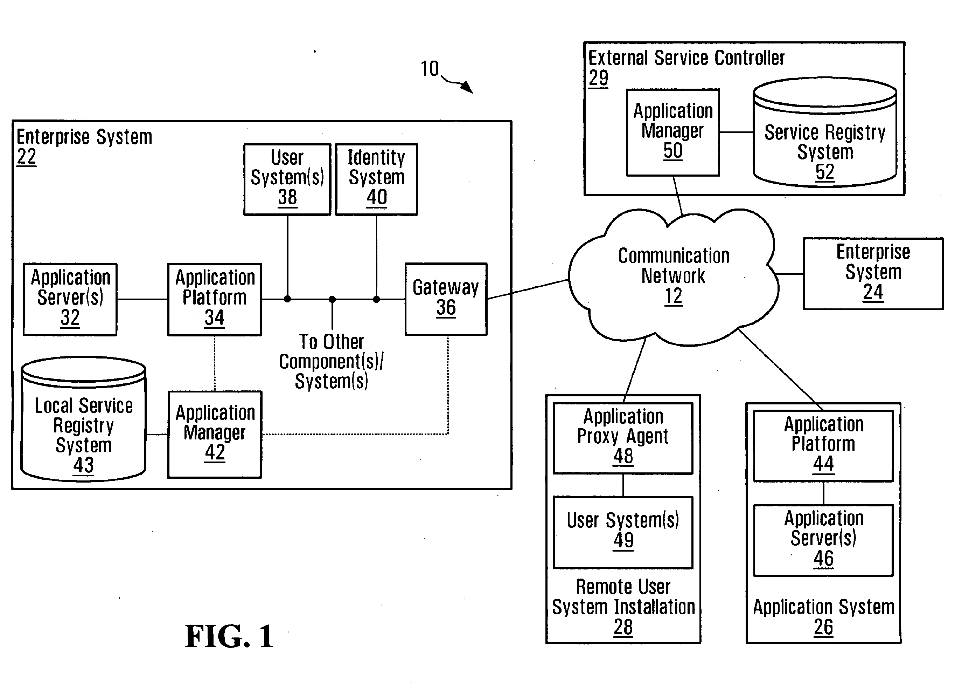

Fig. 1 is a block diagram of a communication system in which embodiments of the invention may be implemented. The communication system 10 includes a communication network 12, to which enterprise systems 22, 24, an application system 26, a remote user system installation 28, and an external service controller 29 are operatively coupled through respective communication links.

The enterprise system 22 includes one or more application servers 32, an application platform 34 operatively coupled to the application server(s), a gateway 36 operatively coupled to the application platform and to the communication network 12, one or more user systems 38 operatively coupled to the application platform and to the gateway, an identity system 40 operatively coupled to the application platform, to the user system(s), and to the gateway, and an application manager 42 operatively coupled to the application platform, to the gateway, and to a local service registry system 43. Other components or systems, such as firewalls located on either side of the gateway 36 to provide a DeMilitarized Zone (DMZ), may also be deployed in the enterprise system 22. The enterprise system 24 may have a similar structure.

In the application system 26, an application platform 44 is operatively coupled to the communication network 12 and to one or more application servers 46. The remote user system installation 28 includes an application proxy agent 48 operatively coupled to one or more user systems 49. An application manager 50 is operatively coupled to the communication network 12 and to a service registry system 52 in the external service controller 29.

Although many enterprise systems, application systems, remote user system installations, external service controllers, and possibly other types of systems may be provided in a communication system, only illustrative examples of certain types of systems have been shown in Fig. 1 to avoid overly complicating the drawing. Internal details of the communication network 12, such as border or access equipment and core switching/routing components, and the enterprise system 24 have also been omitted from Fig. 1 for similar reasons. The type, structure, and operation of the communication network 12 may vary between deployments of embodiments of the invention. Other embodiments of the invention may also include enterprise systems, application systems, remote user system installations, and/or external service controllers that include fewer, further, or different components, with similar or different interconnections, than shown.

It should therefore be appreciated that the communication system 10 of Fig. 1, as well as the contents of the other drawings, are intended solely for illustrative purposes, and that the present invention is in no way limited to the particular example embodiments explicitly shown in the drawings and described herein.

Those skilled in the art to which the present invention pertains will be familiar with many different types of communication networks, including overlay networks such as application layer networks and more traditional infrastructures. The present invention is not limited to any particular type of communication network. In one embodiment, the communication network 12 is the Internet or some other public network.

Many examples of access technologies through which the systems 22, 24, 26, 28, 29 access the communication network 12 will also be familiar to those skilled in the art, and accordingly have not been separately shown in Fig. 1.

Considering first the enterprise system 22, an application server 32 supports one or more applications that may provide functions, illustratively services, for use by at least the local user system(s) 38. Where multiple application servers 32 are deployed, each server supports a respective set of functions or services, which may or may not overlap the services supported by other servers.

In some embodiments, these functions are also made available for use by external user systems, such as user systems in the enterprise system 24, where owners or operators of the enterprise systems 22, 24 have an agreement for inter-system access by their users, and/or by the user system(s) 49 at the remote user system installation 28. The external service controller 29 may be involved in managing the usage of services, which are provided by service provider systems such as the application server(s) 32 within one administrative domain, by external user systems, as described in further detail below.

References herein to services are intended to convey the notion of any such function. Generally, an application server 32 executes a software application to provide these functions. A service, such as a web service, is an example of an application function that is exposed to user systems, in the context of the present disclosure. Any references to applications, functions, and services should be interpreted accordingly.

An application server 32 may include such components as one or more processors, one or more memory devices, and an interface for exchanging application transaction information, such as service request messages and corresponding responses, with user systems. Memory devices in an application server 32 may be used to store operating system software, application software, etc., for use by the application server processor(s). Enterprise systems such as 22 are often implemented as a network, in which case a network interface enables the application server(s) 32 to communicate with the user system(s) 38 and possibly other components of the enterprise system. In another possible implementation, an application server 32 includes separate interfaces for communicating with different enterprise system components.

A user system 38 may similarly include one or more processors, one or more memory devices, and some sort of interface(s) for communicating with the application server(s) 32, and possibly other components of the enterprise system 22. Operating system software, client software for interacting with the application server(s) 32, and/or other types of information may be stored in user system memory devices.

Those skilled in the art will be familiar with many different types of systems that provide and/or use network applications. Embodiments of the present invention relate primarily to managing the use of network services, as opposed to how these services are actually supported, and accordingly the application server(s) 32, the user system(s) 38, and their operation are described only briefly herein to the extent necessary to illustrate aspects of the invention.

The identity system 40 represents another component that is commonly provided in enterprise systems such as corporate networks and will be familiar to those skilled in the art. Access to services supported by the application server(s) 32 in many cases must be restricted to a particular set of users. The identity system 40, which may authenticate users and/or user systems through interaction with a Lightweight Directory Access Protocol (LDAP) directory or other type of user database, for example, supplies a digital identity that may be used for authorizing or denying access to network services.

In terms of structure, the application platform 34 includes application server interfaces that are compatible with the user system interfaces, illustratively Application Programming Interfaces (APIs), of the application server(s) 32, one or more interfaces compatible with the application server interface(s) of the user system(s) 38, and components for processing messages or other information received and/or transmitted through these interfaces. As described in further detail below, external user systems may be able to access the application server(s) 32 through the gateway 36, in which case the user system interface(s) of the application platform 34 may also enable the application platform to communicate with the gateway 36. However, in some embodiments, a separate gateway interface may be provided for this purpose.

The gateway 36 would also include one or more internal interfaces compatible with interfaces of other components of the enterprise system 22, one or more external interfaces for enabling communication signals to be transmitted and/or received through the communication network 12, and intermediate components for processing signals received and/or transmitted through the interfaces.

The application manager 42 represents a control or monitoring element that might not itself perform real-time processing of information as it is transferred between the application server(s) 32 and the local user system(s) 38 or external user systems. The application manager 42 may communicate with the application platform 34 and the gateway 36 through compatible interfaces, to perform such functions as configuring the application platform and/or the gateway, illustratively by downloading protection policies to the platform and/or the gateway for enforcement.

Information relating to available services, possibly including both local services provided by the application server(s) 32 and remote services provided by remote service provider systems such as the enterprise system 24 and the application system 26, is stored in the local service registry system 43, and may be accessible to the application manager 42 through any of various forms of interfaces. The registry system 43 itself may be implemented in one or more memory devices, such as solid state memory devices and/or memory devices for use with movable and possibly removable storage media.

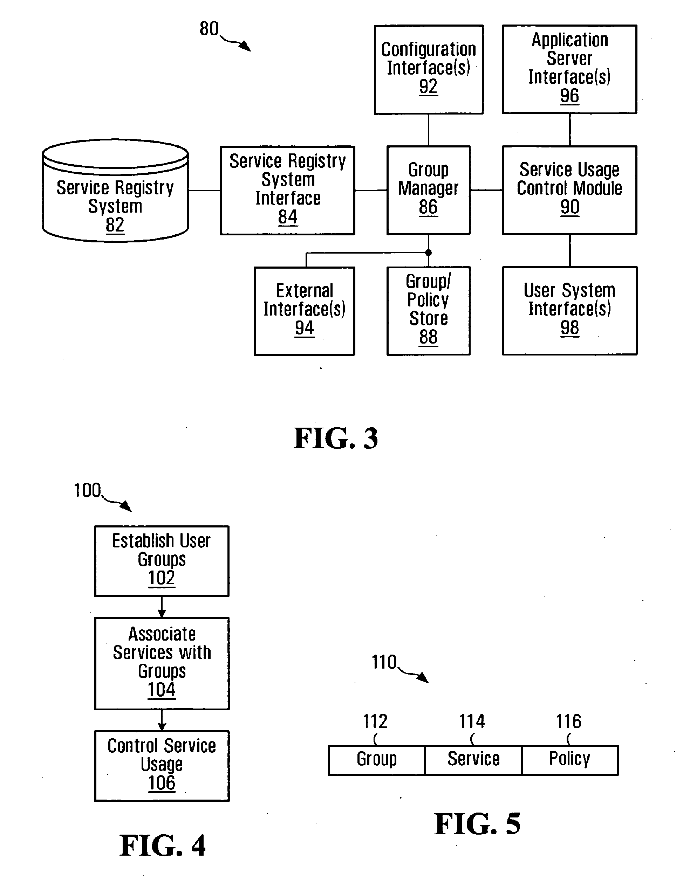

The internal components of the application platform 34, the gateway 36, and the application manager 42 may be implemented in hardware, software, firmware, or some combination thereof. An illustrative example of a subsystem that may be provided in or distributed between the application manager 42, the application platform 34, and the gateway 36 is described below with reference to Fig. 3.

In a traditional deployment of a so-called Service Oriented Architecture (SOA) for an enterprise network, SOA components are individually deployed and integrated on each application server. Publishing a service for use on a network, within the enterprise system 22 for instance, would require a service registry for discovery and management of service offerings. Although web service standards address the need to restrict service access to authorized users, a web services policy server would be needed to store and provide this information. Enforcing these policies can also be a challenge, in that software vendors may require substantial changes to applications and servers in order to adapt to enterprise systems.

All of this can represent a significant project for an enterprise, and may well have a relatively long implementation cycle. In addition, the skill set required to implement such a project is highly specialized, which might make an SOA implementation not economically feasible.

When extending web services or other types of applications to partners, between the enterprise systems 22, 24, for example, even more challenges exist for an SOA infrastructure deployed on application servers. For instance, applications deployed at partner sites might use diverse security mechanisms that cannot share user identity information freely, requiring translation of security tokens for users. Placing the burden of security token translation, or other security functions, on each application server tends to be costly and inefficient.

Data privacy requirements are also very difficult or even impossible to enforce at each application server since application servers themselves might not be aware of whether a user system, or more generally a consumer of its service, is external to its enterprise system.

XML-specific denial of service (XDoS) attacks, and possibly other threats, may be particularly problematic in application server-based SOA implementations. Web services, for example, are open to XDoS attacks, which cannot be effectively dealt with on application servers.

The migration of a server-based SOA to a web services model to achieve application interoperability via loosely coupling applications necessitates the need for additional messaging, illustratively in the form of SOAP headers and XML messages, as well as additional processing requirements for managing these messages. This additional overhead consumes network bandwidth and can result in significant new requirements for application server hardware.

An alternate model for deployment of an SOA infrastructure is to integrate the SOA components into enterprise network elements, as shown in Fig. 1. The application platform 34, the gateway 36, and the application manager 42 represent SOA components in the enterprise system 22.

Deploying the SOA infrastructure separately from the application server(s) 32 may provide several benefits: the SOA infrastructure is then application agnostic, applications require minimal modification, the SOA infrastructure is an end-to-end integrated solution, application server processing overhead is minimized, and network bandwidth can be optimized.

With an enterprise system-/network-based SOA deployment, any message translations required for applications to interoperate can be performed according to policies set within the enterprise system, not by the applications themselves. This allows translations to be defined independently of applications, removing the reliance on application vendor implementations.

The business logic required to adapt message format and content is thus provided by the enterprise, not by the application, minimizing application modification. Web services messages, for example, can be adapted within an enterprise network to achieve application interoperability. As new interoperability requirements arise, perhaps due to merger, acquisition, or the need to integrate with a new partner, no application modification is required. New policies for message translation can instead be defined to provide for the new interoperability.

An SOA infrastructure deployed as an integrated enterprise network solution can provide a single monitoring, control, and consolidated reporting point, illustratively the application manager 42. This can be important to enable proper corporate governance, continuous corporate improvement, and the ability to demonstrate compliance with regulations concerning data privacy and network security, for instance.

Application server processing requirements for application interoperability can be significantly reduced for two reasons: application server offload and a reduced number of required translations. Translations can be done once, at the application platform 34, for example, and then forwarded onto multiple destinations rather than each application performing its own translation.

The network bandwidth consumed by additional message traffic can be reduced by routing packets to the application server(s) 32 based upon inspecting the message SOAP headers, XML tags, or other message content. Routing can be sensitive to application contexts rather than based on static IP addresses, for example.

If application server functions are to be extended to partner enterprise systems, an SOA infrastructure deployed as enterprise network infrastructure may provide many further advantages. Translation of security tokens can be done once at the demarcation point between the partners' networks, illustratively at the gateway 36 for external accesses to the application server(s) 32, providing a single enforcement point for security policy. Data privacy can also be enforced at the point where data leaves a security domain, again at the gateway 36, for example. This drives efficiencies and reduces costs. In addition, denial of service attacks targeted at corporate web services can be defended at the gateway 36, the enterprise network edge, which is perhaps the most secure place to deal with this issue.

The application platform 34 provides an SOA infrastructure for integrating applications that traditionally have run as stand-alone applications, and may enable such capabilities as controlling and monitoring all activity initiated by a validated user to thereby allow generation of a consolidated audit trail, translation for message and document formats, managing the life cycle for applications including the staged rollout of web services and rollback to previous versions in the event of unexpected behavior for instance, and monitoring application/service performance to ensure that applications/services meet internal corporate requirements.

This listing of example functions of the application platform 34, like other functional examples noted herein, is by no means restrictive or exhaustive. Many functions may be implemented independently, every embodiment need not necessarily provide all functions, and other functions may also be or become apparent to those skilled in the art.

Benefits of the application platform 34 may include reduced application integration cost through minimum change to existing applications, as noted above, ensuring that access to corporate applications complies with Government regulations, a central monitoring and control point for employee access to web services, and continuous corporate improvement through consolidated reporting.

The gateway 36 effectively extends an intranet SOA provided by the enterprise system 22, through the communication network 12, into an extranet, allowing seamless integration with customers and partners without compromising security or privacy. Functions of the gateway 36 may include, possibly among others, any or all of extending applications to a partner extranet and branch locations, providing seamless mobility for partner access to applications, ensuring partner access to corporate applications complies with Government regulations, and maintaining privacy of corporate identities without compromising traceability.

In providing mobile access to the application server(s) 32 from any partner sites associated with the enterprise system 22, the gateway 36 may allow the secure identification of partner institutions and acceptance of identities between different security domains. Application message and data translations, for user systems associated with external partner sites, may also be provided by the gateway 36, while ensuring that all data remains private as per corporate policy. A consolidated audit trail of all application access may be collected and provided to an external partner enterprise system by the gateway 36, to demonstrate conformance with regulations for instance.

The application manager 42 may provide a central point for monitoring and control of the application platform 34, the gateway 36, and any other platforms and gateways (not shown) in the enterprise system 22. In some implementations, globally consistent policies for all applications, so as to ensure improved corporate governance and/or compliance with Government regulations or instance, can also be established through the application manager 42 and distributed to the application platform 34 and/or to the gateway 36 for enforcement. The central application manager 42 may also provide for globally consistent application change management. According to an embodiment of the invention, partner group management functions are at least partially provided in the application manager 42.

As noted above, the enterprise system 24 may be substantially similar to the enterprise system 22.

The enterprise system 22 includes both application server(s) 32 that support applications and one or more user system(s) 38 that may use those applications. However, it should be appreciated that application servers and user systems need not necessarily be co-located. The application system 26, for example, includes one or more application servers 46, but no local user systems. Although only an application platform 44 is shown in the application system 26, some implementations of an application system might also include a gateway. Whereas the application system 26 as shown might be suitable, for example, for a remote data center that is associated with a primary data center as the enterprise system 22, a stand-alone or "unaffiliated" application system that hosts applications for use by external user systems might also include a gateway for handling authentication of the external users for instance.

The application platform 44 in the application system 26 may interact with the application manager 42 of the enterprise system 22, or more generally the application manager of an affiliated enterprise system. A local application manager may also be provided in a stand-alone application system. In some implementations, the external service controller 29 similarly interacts with SOA infrastructure components in multiple different administrative domains. For example, the external service controller 29 is operatively coupled to the communication network 12 and might configure the gateway 36 and a gateway in the enterprise system 24 to collect and exchange application performance statistics.

A user-only deployment is shown in Fig. 1 as the remote user system installation 28. The application proxy agent 48 allows the user system(s) 49 at a partner or branch location, for example, to use applications provided by remotely located application servers. In one embodiment, the application proxy agent 48 is a scaled-down version of the gateway 36. The application proxy agent 48, like the gateway 36, might maintain privacy of corporate identities during authentication of the user system(s) 49 with the enterprise system 22 without compromising traceability, and support secure communications through the communication network 12 using tunnelling techniques, for example, but need not necessarily be able to authenticate external users since the remote user system installation 28 does not host applications that could be used by external user systems.

The external service controller 29 provides for externally managed service offerings, but need not itself include or operate in conjunction with local service provider systems or user systems. The application manager 50 and the service registry system 52 may be substantially similar to the application manager 42 and the service registry system 43 in the enterprise system 22. However, where the external service controller 29 does not actually participate in the transfer of information between service provider systems and user systems, the application manager 50 may communicate with the communication network 12 through a simpler network interface than an enterprise system gateway such as 36. The application manager 50 and the service registry system 52 may interact with multiple different enterprise systems, application systems, and/or remote user installations to provide an externally managed service offering.

It is expected that managed service offerings will be supported by external service controllers such as 29. However, it is possible that an application manager and/or other component(s) within an enterprise system could be configured to support a managed service offering.

In the system 10, a user at a user system 38 that wishes to make use of an application provided by an application server 32 is first authenticated by the identity system 40. Those skilled in the art will be familiar with many security schemes that may be used for this purpose, such as username/password authentication. Where remote access to an application server 32 is supported, user authentication may be handled by the gateway 36, possibly through interactions with an external identity system. The gateway 36 may also be involved in authentication when a user system that is associated with a partner enterprise system or site is locally connected to the enterprise system 22 and wishes to access an application server 32.

When a user has been authenticated, messages or other forms of information may be exchanged between a user system 38 and the application server(s) 32. A user may be allowed to access multiple applications after a single successful authentication. Information required for accessing a service may be obtained from the local service registry system 43, or from another registry such as the service registry system 52 if a service in an externally managed service network is to be accessed.

Improved techniques for managing usage of network services are needed, as noted above. Embodiments of the invention may be used to allow enterprises to securely integrate internal applications with business processes at external partner enterprises, for example. One or more of the gateway 36, the application manager 42, and the external service controller 29 may participate in providing this functionality.

As described briefly above, the gateway 36 may be implemented as a network node that is positioned in a DMZ of the enterprise system 22 to process web service messages in real time in order to facilitate integration with web services at various other partner sites, such as the enterprise system 24, the application system 26, and the remote user system installation 28. The application manager 42 is a network and service management element that is deployed in the enterprise system 22, and may coordinate web service message processing nodes, maintain a central service registry of all web services that are published by the enterprise, and, in accordance with an aspect of the invention, manage service usage. The external service controller 29 may be a substantially similar network and service management element, but is deployed by an operator of the communication network 12 to offer managed network services to subscribing partners.

In one embodiment described in further detail below, the gateway 36 and the application manager 42 are designed to allow the enterprise system 22 to publish network services to partners, and to allow those partners to securely consume the published network services, subject to specified policies. An enterprise's partners may include partners with which the enterprise has many different types of relationships, such as customers, suppliers, service agencies, and even competitors. It may therefore be desirable to provide, to an enterprise that publishes network services to partners, the ability to maintain separate partner groups with corresponding group-specific service usage policies. The group-specific policies govern the usage of network services by the members of each group.

The external service controller 29 enables a managed service operator (MSO), such as an operator of the communication network 12, to generate new revenue from the sale of managed partner extranet equipment and services. An enterprise might subscribe to a service offered by an MSO in order to gain access to certain markets where third party management is necessary for user authentication, service assurance, and/or non-repudiation services, for instance. A private managed trading network represents one example of such a market. From the perspective of an enterprise, a managed service network may be very similar in nature to a virtual extranet, with the exception that the MSO may be involved in the management of an externally managed partner group.

As noted above, it may be advantageous for an enterprise to participate in managed service networks using the same infrastructure that maintains any self-managed extranet connections. A common infrastructure solution may be less expensive to build and operate and also allow a consistent means of service management and monitoring.

A set of connections between an enterprise and its external partners may be considered a form of extranet. The subdivision of partners into groups, which might be delineated on the basis of the nature of relationships to an enterprise, can be viewed as creating an overlay of virtual extranets for a single physical extranet. This can be a difficult task for which there is no current adequate solution.

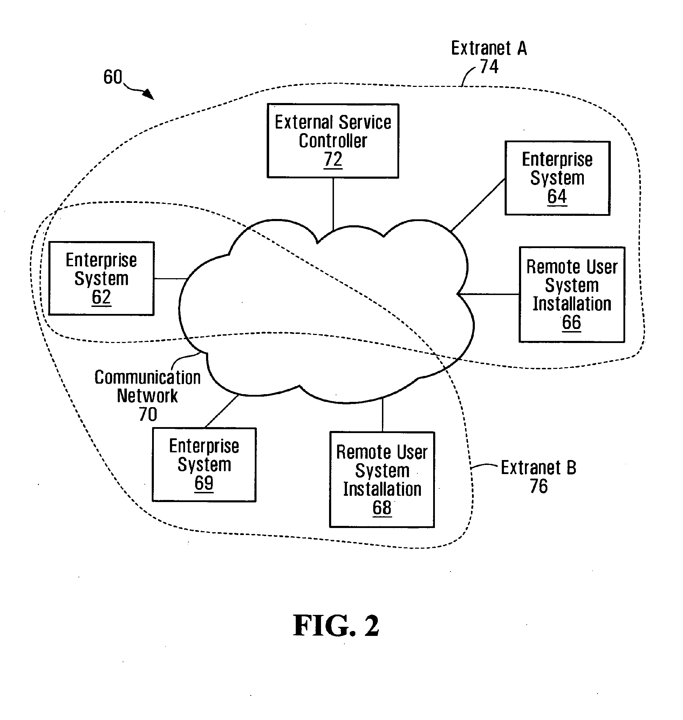

Fig. 2 is a block diagram of a communication system that includes multiple extranets. The system 60 includes enterprise systems 62, 64, 69, remote user system installations 66, 68, and an external service controller 72 operatively coupled to a communication network 70. In the example shown, the enterprise system 62 is to participate in two different extranets, including extranet A 74 and extranet B 76. In the context of this example, the two extranets, A 74 and B 76, might be distinct due to the nature of the business relationships that a corporation which deploys enterprise system 62 has with the other participants in these extranets. This is described in further detail below.

Other implementations may involve different numbers and/or types of components and extranets than shown in Fig. 2. It should also be appreciated that the term "extranet", in the context of the present application, is intended to include a set of one or more connections that enables the usage of network services between partner entities. References herein to extranets should be interpreted accordingly.

The enterprise systems 62, 64, 69, the remote user system installations 66, 68, the external service controller 72, and the communication network 70 may be substantially identical to the similarly labelled components shown in Fig. 1 and described above.

In accordance with one aspect of the invention, both extranets 74, 76 can be created and managed through the same physical infrastructure. Although the enterprise system 62 participates in two extranets 74, 76, dedicated infrastructure is not required for each extranet. The enterprise owner/operator of the enterprise system 62 has business relationships with multiple partners. These partners are the owners/operators of the enterprise systems 64, 69 and the remote user system installations 66, 68. A "partner connection" is established through the communication network 70 between the enterprise system 62 and each of the enterprise systems 64, 69 and the remote user system installations 66, 68. All of these partner connections together form a single "physical" partner extranet.

However, these partners may fall into different categories, based on different types of business activities or relationships, for example. The partners associated with the enterprise system 64 and the remote user system installation 66 might be suppliers of the enterprise that owns/operates the enterprise system 62, while the partners associated with the enterprise system 69 and the remote user system installation 68 might be customers of that enterprise. It may thus be desirable for an enterprise to differentiate and group its partners based on the business purposes and activities, and/or to define appropriate sets of rules to govern and manage the separate groups of partners.

According to embodiments of the invention, respective virtual extranets for each of multiple partner groups, shown as extranets A 74 and B 76 in Fig. 2, can be established and managed as overlays on a single "physical" extranet, represented in Fig. 2 as the communication network 70.

The example system 60 shown in Fig. 2 also illustrates the concepts of self-managed and externally managed services. The external service controller 72 provides a managed service network as the extranet A 74, and the enterprise system 62 itself manages the extranet B 76. The enterprise system 62 thus participates in the extranet A 74 as a subscriber to the managed service offering of the external service controller 72, and in the extranet B 76, which it also creates and manages.

It should be noted that participants in the extranet A 74 are all subscribers to a managed service offering and, as such, may view the extranet A in a similar manner, as a multi-corporation Business-to-Business (B2B) extranet that is governed by a common usage policy and central management. Other than the enterprise system 62, however, participants in the extranet B 76 may be unaware of the multi-corporate nature of this extranet. The extranet B 76 may be defined by the corporation that deploys enterprise system 62 as a collection of its B2B connections, which it governs and manages in a common manner. The corporations associated with the enterprise system 69 and the remote user system installation 68 may view their B2B connection with the enterprise system 62 as being point-to-point, and may, but need not necessarily, be aware of the existence of other participants in the extranet B 76.

The techniques disclosed herein could be implemented, for example, at one or more of an application platform, a gateway, and an application manager in the enterprise system 62. These techniques might also or instead be implemented in the external service controller 72. Distributed deployments are also contemplated. Group policies established at the enterprise system 62 for any of its network services that are advertised in the extranet A 74 through the external service network controller 72 may actually be enforced at the enterprise system 62, for example.

Application platform-, gateway-, and/or application manager-based embodiments of the invention may be particularly suited for SOA settings. In other embodiments, network service user group management functions may be integrated with an application server or other component.

Fig. 3 is a block diagram of a service usage management system. The system 80 includes a service registry system 82, a service registry system interface 84 that is operatively coupled to the service registry system, a group manager 86 that is operatively coupled to the service registry system interface, to a group/policy store 88, to one or more configuration interface(s) 92, and to one or more external interface(s) 94, and a service usage control module 90 that is operatively coupled to one or more application server interface(s) 96 and to one or more user system interface(s) 98.

As noted above with reference to Fig. 1, the contents of the drawings are intended solely for the purposes of illustration. The device(s) or system(s) in which the system 80 is implemented may include additional components that have not been explicitly shown, for example. These components might take various forms depending on the point at which, or the device(s)/system(s) in which, the system 80 is implemented. In general, other embodiments may include further, fewer, or different components than explicitly shown, with similar or different interconnections.

The types of connections through which the components of Fig. 3 are operatively coupled may, to at least some extent, be implementation-dependent. Electronic devices often use various types of physical connectors and wired connections. Connections between at least some components may be long-range connections, illustratively through a communication network. Where a group manager 86 is implemented at an external service controller that is remotely located from a gateway in which the service usage control module 90 is provided for group-specific service usage enforcement for instance, the group manager and the service usage control module might not be directly connected. An operative coupling might also or instead be provided through variables, registers, or commonly accessed areas of a memory, and thus include a logical coupling.

Hardware, software, firmware, or combinations thereof may be used to implement components of the system 80. Processing elements such as microprocessors, microcontrollers, Programmable Logic Devices (PLDs), Field Programmable Gate Arrays (FPGAs), Application Specific Integrated Circuits (ASICs), and other types of "intelligent" integrated circuits may be suitable for this purpose.

The service registry system interface 84 enables the group manager 86 to access the service registry system 82, which might but need not necessarily be implemented in the same physical device or system as the group manager 86. The service registry system 82 itself may include one or more memory devices for storing information relating to network services. Those skilled in the art will be familiar with service registries and the types of service information that is stored in such registries. The type and structure of the service registry system interface 84 will depend on the memory device(s) used to store service information in the service registry system 82 and possibly also the mechanism provided for accessing the service information. For example, the service registry system 82 and the service registry system interface 84 may support Universal Description, Discovery, and Integration (UDDI) for service-related functions.

According to one embodiment, the service registry system 82 includes a respective network service registry for each of multiple partner groups. These registries may be stored in separate memory devices, or a single memory device may include different storage areas for storing multiple registries.

The system 80 may interact with other components of a local network and a partner network through the interfaces 92, 94, 96, 98. These interfaces may be of the same type or different types, or even be the same interface where the same communication medium is used for information transfers with all other components. For example, in the case of a self-managed partner group, configuration might be accomplished through a user system, in which case the configuration interface(s) 92 may actually be a user system interface 98. The user system interface(s) 98 may thus also be operatively coupled to the group manager 86. Similarly, for an MSO implementation, remotely entered configuration information might be received by an external service controller from an enterprise system through an external interface 94. This external interface is then effectively operating as a configuration interface 92. These variations further illustrate that embodiments of the invention may include different numbers and/or types of components that may be interconnected in a different manner than shown.

Through the configuration interface(s) 92, multiple partner groups, also referred to herein as network service user groups, can be configured. An administrator of an enterprise system may create respective groups for the enterprise's suppliers and customers, for example. According to one embodiment, an administrator uses a terminal in an enterprise network to configure groups. The same type of network interface, and possibly the same physical interface, can then be used as a configuration interface 92 and a user system interface 98. In the case of an external service controller, an external interface 94 might similarly be used as a configuration interface 92. The configuration interface(s) 92 may also or instead include further types of interfaces, such as a Command Line Interface (CLI) or other dedicated control or management interface.

An external interface 94 enables the system 80 to exchange information with one or more remote systems or components. In the communication system of Fig. 2 for instance, exchanges between the enterprise system 62 and the external service controller 72 may involve transfer of information through the communication network 70 and appropriate network interfaces. A network interface that is compatible with the communication network 70 may be provided at a gateway of the enterprise system 62, for example. A corresponding network interface would be provided at the external service controller 72, although not necessarily in a gateway.

As noted above, an external interface 94 may act as a configuration interface 92 where the system 80 is implemented in an external service controller. In an enterprise system-based implementation that enables an enterprise system to participate in both self-managed and externally managed service offerings, configuration information that is entered through a configuration interface 92 might be forwarded to an external service controller through an external interface 94.

Each application server interface 96 allows the system 80 to exchange application access information such as web service messages with a respective set of one or more application servers. A user system interface 98 similarly enables the system 80 to exchange application access information with one or more user systems. It should be noted that the user system interface(s) 98 may enable communications with user systems that are located within an enterprise system or external to the enterprise system. For the purposes of partner group management and service usage management, external user system interfaces would be of primary interest. However, where internal usage of network services within an enterprise system is controlled in accordance with service-specific policies, enforcement of group policies as described herein could potentially be integrated with service-specific policy enforcement. Thus, the user system interface(s) 98 may include external and possibly internal user system interfaces.

The structure and operation of the interfaces 92, 94, 96, 98 will be dependent to at least some extent on the communication media and protocols used in information transfers. Those skilled in the art will be familiar with many types of interfaces through which group or service information may be received and/or transmitted by the system 80. These interfaces may also vary depending on where in a communication system the system 80 is implemented.

The group/policy store 88 may be provided in one or more memory devices. Solid state memory devices are common in electronic equipment, and the group/policy store 88 may be implemented using one or more memory devices of this type. However, other types of memory devices, including memory devices for use with movable or even removable storage media, may also or instead be used to implement the group/policy store 88.

In accordance with an aspect of the invention described in further detail below, usage of network services is controlled based on associations between groups and services. Group policies may also be specified during group configuration to further govern network service usage. Service policies represent another level of rules that could be applied to usage of services. A service-specific policy, for example, might specify access requirements, information translation/formatting requirements, and/or monitoring requirements for usage of a service, in addition to any group-specific requirements specified for user groups with which the service is associated. Enterprise-wide policies might also or instead be applied to usage of any services that are provided by service provider systems within an enterprise.

As noted above, components of the system 80 may be implemented using hardware, software, and/or firmware. These components are therefore described herein primarily in terms of their functions. Based on the functional descriptions, a person skilled in the art will be enabled to implement service usage management techniques according to embodiments of the invention in any of various ways.

In operation, the group manager 86 is operable to manage multiple network service user groups. Each network service user group includes at least one service user or consumer as a member. According to one possible embodiment, group management is based on service accounts. Suppose, for example, that an administrator of the enterprise system 62 (Fig. 2) wishes to provision the virtual extranets A 74 and B 76. The administrator could create a separate partner group for each extranet in the group/policy store 88. This might involve writing a group name or other identifier to the store 88. Partner accounts for each partner 64, 66, 68, 69 and user accounts for individual users from those partners can also be created, either in the group/policy store 88 or possibly in a separate partner/user management subsystem (not shown).

The partner accounts, user accounts, or both, can then be added to the respective partner groups. Partner/user account identifiers could be stored in a group data structure, or links such as pointers could be created to indicate that a partner/user is a member of a network service user group. Where both partner and user accounts are created, group membership may be indicated through multiple relationship links. For example, a group data structure in the group/policy store 88 might include only partner accounts in some embodiments. In this case, individual user accounts for members of the group can be identified based on their relationships with the partner accounts. Thus, although a network service-user group includes users as members, a group record or data structure might not necessarily include explicit or direct identifiers of such members.

With reference again to Fig. 2, partner and/or user accounts for the partner systems 64, 66 and the user systems therein would be added to the extranet A group, and partner and/or user accounts for the partner systems 68, 69 and the user systems therein would be added to the extranet B group. The partners/users categorized in the same group form a virtual extranet.

Group configurations can be modified in a substantially similar, by adding members to and/or removing members from groups. Deletion of entire groups may also be supported in some embodiments.

A partner extranet may be self-managed or externally managed. For a self-managed extranet, group configurations are maintained locally, in the group/policy store 88. In the case of an externally managed extranet, however, the group manager 86, which is within the administrative domain of an enterprise system or application system for instance, also or instead sends group configuration information to an external service controller that is outside the administrative domain, through an external interface 94. In the system 60 shown in Fig. 2, for example, an administrator might have administrative control over only the enterprise system 62, and not the other system components. The enterprise systems 62, 64, 69, the remote user system installations 66, 68, and the communication network 70 may all represent different administrative domains.

A group manager 86 at an external service controller receives the configuration information from an enterprise-based group manager through an external interface 94, which in this case is acting as a configuration interface 92. An external service controller may also receive group configuration information from other service provider systems that participate as subscribers of a managed service offering, and manage network service user groups for all of the subscribers.

Any or all of the configuration information that is sent to an external service controller may also be stored locally. Group policies may be enforced by an enterprise system, for example, but sent to an external service controller so that the service controller is aware of the policies that will be enforced. No such "peering" between enterprise-based equipment such as an application manager or a gateway and network operator equipment such as an external service controller is provided in currently available network service products.

The group manager 86 also manages associations between network services and the plurality of network service user groups. An association between a network service and a network service user group enables usage of the network service by each member of the network service user group. Multiple virtual extranets can thus provide the flexibility for an enterprise to make a network service available only to the partners within a specific virtual extranet. For instance, with reference to Fig. 2, the enterprise system 62 can announce a new web service that is to be made available to its partners 64, 66 by publishing it to the extranet A 74, without also making the partners 68, 69 in the extranet B 76 aware of that network service.

As shown in Fig. 2, the virtual extranet A 74 is externally managed by the external service controller 72. The enterprise system 62, and possibly other partners of the extranet A 74, publish new network services to the external service controller 72. A corporate supply chain of the owner/operator of the enterprise system 62 is a good example to illustrate the shared usage of network services. Network services may be shared in a supply chain network service user group to accomplish the task of finding or managing particular components needed by a corporation to make a product or service and deliver it to customers.

Supply chain activity can include a fractured group of tasks and product offerings. Each partner 62, 64, 66 in the supply chain might compose dozens of specific tasks daily, such as searching for new suppliers of a specific component. Although some organizations have assembled many of these different tasks together, no currently available products provide a single complete package that can be used by various corporations or partners.

Embodiments of the present invention provide a mechanism to publish each new network service to a user group or "community", with all participants in the user group being enabled to take advantage of the new network service. An advantage of this type of mechanism is that network services can be shared among the partners of a virtual extranet, as defined in a network service user group, in a seamless manner.

Network service to group associations may be managed as part of service publication or advertisement, for example. Partners in an externally managed user group such as the extranet A 74 (Fig. 2) will use the external service controller 72, and illustratively a service registry system thereof, as the contact point to find new network services and/or to publish their own network services. In other words, any partner in the extranet A 74 that is interested in consuming specific network services through the extranet will interact with the external service controller 72. This interaction may involve service discovery based on query criteria that are specific to the virtual extranet business activity. The external service controller 72 of an externally managed service offering may host a global registry system that is shared between all of the subscribed partners participating in that managed service offering.

The process of publishing a new network service to be used by all participants in a virtual extranet may be initiated when a new network service is published to a local service registry within an administrative domain in which the network service is provided. With reference to Fig. 1, an employee might publish a new network service provided by an application server 32 to the local service registry system 43 by sending a UDDI Publish message to the application manager 42. Those skilled in the art will be familiar with the normal contents of a UDDI Publish message and other forms of service notifications. In accordance with an aspect of the invention, a network service-publish message or other notification that is used to make a network service available to service users also includes an indication of the network service user group(s) by which the service can be used.

Upon receiving a UDDI Publish message or other notification of the new network service, the application manager 42 adds the network service to the local service registry system 43. As noted above, a service notification also includes an indication of one or more groups to which the service is to be made available. A group indication may be in the form of a group name or other identifier, for example, although other indications may also or instead be provided.

A network service is associated with one or more network service user groups based on the group indication(s). Network service associations may be implied or explicitly specified or in any of various ways. For example, the local service registry system 43 may include multiple group-specific registries for storing network service information for network services. A respective registry might be provided for each network service user group, for example. In this case, associations between the network services and network service user groups may be managed by managing the storage of network service information in particular registries.

Associations may instead be explicitly indicated by storing one or more group identifiers with service information in the local service registry system 43. An explicit indication of each network service that may be used by members of a network service user group could instead be stored with group information in the group/policy store 88 (Fig. 3).

It should therefore be apparent that the present invention is in no way restricted to any particular manner of specifying or creating network service to group associations.

The group manager 86 handles at least the group association aspects of the process of making new network services available for usage. Accordingly, the group manager 86 may be implemented as part of a service publishing component, or at least operate in conjunction with such a component. Where an application manager 42 (Fig. 1) handles network service publishing, it may be desirable to incorporate the group manager 86 into the application manager 42, for example. The group manager 86 could instead be operatively coupled to the application server interface(s) 96 so that it can intercept network service notifications and then associate each network service with one or more particular network service user groups. Another possible option would be to support manual configuration of associations after a network service has been added to the service registry system 82.

Previously created network service user groups can be modified by adding or removing members, as described above. It may also be desirable to support modification of associations between network services and network service user groups. Associations could be changed manually or by re-publishing a network service with indications of a revised set of one or more associated network service user groups, for example.

A local service registry system such as 43 (Fig. 1) may be the service discovery point for self-managed network service user groups. External members of each self-managed group may be advised of this service discovery point by the group manager 86. If the group manager 86 and the service registry system 82 are implemented within the core of an enterprise system or other administrative domain, however, service information may be communicated to another service registry system, illustratively a service registry system maintained at an edge or border device such as a gateway, which then acts as the service discovery point for the self-managed network service user groups that include members outside the administrative domain. The registry system based in the core of the administrative domain could still be used by internal users to find registered network services.

If a network service is to be made available in an externally managed service offering, a service notification or network service user group information for the user group corresponding to the managed service offering might include a flag or other indication to this affect- Such a flag or indication may be used to cause the group manager 86 to forward service information to an external service controller. Based on an incoming UDDI Publish message or other service notification, the group manager 86 determines whether service information, which may be the message or notification itself, is to be sent to an external service controller. The group manager 86 might make this determination when creating associations between a network service and a network service user group. For example, the group manager 86 may be operatively coupled to the application server interface(s) 96 to intercept network service notifications, create the requested association(s) for each network service, and decide whether each network service is to be made available in an externally managed service offering.

According to one embodiment, the group manager 86 includes a Federation broker, illustratively a software component for execution by a processing element, for handling communication of network service information to an external service controller. A Federation broker might also be involved in communicating network service information from a core registry system to an edge or border registry system, as described above.

The group manager 86 may attach routing information and/or possibly other information to service information, such as a UDDI Publish message or service notification, that is to be sent to an external service controller. Routing information and/or other information may similarly be attached to service information that is to be communicated from a core registry system to an edge or border registry system.

Service information may be transferred to an external service controller indirectly, illustratively from a group manager 86 through an edge device such as a gateway. A gateway or other intermediate component may receive service information and determine whether the received service information relates to a network service that is associated with a self-managed or externally managed network service user group. Service information for a network service that is associated with an externally managed network service user group is sent to an external service controller. A Federated router that cooperates with a Federated broker and may similarly be implemented as a software component could be provided to handle the process of external transfer of network service information. An external transfer may involve such operations as checking any attached routing information, and routing the service information to a next hop towards the external service controller that serves the particular externally managed network service user group. A routing component such as a Federated router component may be particularly useful in an edge device of a partner system that participates in multiple virtual extranets/overlays that are externally managed by different MSOs, for selecting the correct external service controller of each externally managed network service user group.

This type of routing function may in some embodiments be provided by the group manager 86 itself, rather than in a separate device or component.

At the external service controller, a group manager associates the new network service with the externally managed network service user group, such that usage of the network service will be restricted to members of that network service user group. Network service associations may be created and managed at an external service controller substantially as described above. Local access control rules and/or additional information related to registry access, for example, may also be stored with received service information and applied to control usage of a network service.

From an external service controller, service information relating to a network service that is provided by one group member may be communicated to other partners or group members, for storage in a service registry system at each partner system for instance.

Once a network service is made available to a network service usage group, actual usage of the network service is controlled by the service usage control module 90. Network service usage is controlled by this module 90 on the basis of at least network service to group associations. The service usage control module 90 may receive service discovery requests, for example, and provide service information for only those network services that are associated with the network service user group(s) of which the requesting user is a member. Service usage control based on associations may also or instead be applied during a network service access phase, to block the transfer of service access information such as web service messages between an application server connected to an application server interface 96 and a user system connected to a user system interface 98. Service access information transfer would be blocked where a user who is not a member of any network service user group(s) associated with a network service is attempting to use that network service.

Although shown in Fig. 3 as being operatively coupled to the group manager 86, the service usage control module 90 may also or instead be operatively coupled to the group/policy store 88 and/or to the service registry system 82. Thus, the service usage control module 90 may obtain group and/or service information directly or indirectly, through the group manager 86, from one or more data stores so as to control usage of network services based on service/group associations.

In some embodiments, group management and network service usage control or enforcement functions are implemented at remote locations, illustratively at an external service controller and an enterprise system at which a network service is provided, respectively.

Associations between network services and groups represent one level of network service usage permissions or restrictions. However, additional rules may also be configured for network service user groups, stored in the group/policy store 88, and applied to usage of network services. Group policies may be established to govern the usage of a network service by each member of a network service user group, for example. A group policy might specify a set of one or more rules including network service selection rules that permit or restrict selection of network services by group members, routing selection rules that specify particular routing requirements for a network service, and/or data privacy rules that specify whether and how information transferred during usage of a network service is to be protected. Network service selection rules may actually be considered one form of network service to group associations.

The service usage control module 90 may also be responsible for enforcing group policies. Network service usage can thus be controlled in accordance with both service/group associations and group policies. Although a network service user may be a member of a network service group that is associated with a network service, it is possible that the user could be denied access to a network service based on a group policy. Such a user is enabled for use of the network service by the association between the network service and the network service user group of which the user is a member, but might not actually be granted access to the service if the user does not satisfy some other service access or usage restriction specified in a group policy.

In some embodiments, service usage control modules that are provided at different locations in a communication system have different enforcement responsibilities. For an externally managed network service user group, for example, a service usage control module 90 at the external service controller might enforce service/group association-based control during a service discovery phase. Data privacy rules, however, might be enforced by a service usage control module 90 in an enterprise system in which an application server that supports the network service is implemented.

Where a peering function is provided, the external service controller could be made aware of additional rules or policies that will be enforced by another component. The external service controller, although aware of the additional rules or policies, might or might not take any action on the basis of those additional rules or policies. In the above example of a data privacy policy, the service usage control module at the external service controller could potentially, but need not necessarily, take the data privacy policy into account when responding to a network service discovery request. The external service usage control module could elect to include information for a network service in a service discovery response only if a requesting user is a member of an associated group and is also able to handle data that is protected in accordance with the data privacy policy, for instance.

As noted above, other types of policies or rules such as service-specific policies and/or enterprise-wide policies may affect actual access to a network service by a particular user. Although these other policies or rules are not group-specific, they could potentially be enforced by the service usage control module 90 in some embodiments. An enforcement point such as a gateway, for example, might determine all group, service, and enterprise policies to be applied to usage of a network service, and enforce those policies. The service usage control module 90 could thus operate as, or in conjunction with, a more extensive policy enforcement subsystem.

Embodiments of the invention have been described above primarily in the context of a system. Fig. 4 is a flow diagram of a network service usage management method according to another embodiment of the invention.

The method 100 includes an operation 102 of establishing network service user groups. Each network service user group includes at least one member. At 104, associations between network services and the network service user groups are configured, to enable usage of each network service by members of the network service user group(s) with which the network service has been associated. Control of network service usage in accordance with the associations is represented at 106.

It should be appreciated that the method 100 is illustrative of one embodiment of the invention. Other embodiments may involve fewer, additional, or different operations, and/or performing operations in a different order than shown. For example, each of the operations 102, 104, 106 may be performed in any of various ways, some of which have been described above. Operations such as configuration at 102 and control at 106 may be involved in an overall network service usage management scheme but performed at different locations in a communication system. Different components may also cooperate to support local and external management of network service user groups and/or peering between enterprise system equipment and external network operator equipment.

Further variations of the method 100 may be or become apparent to those skilled in the art, from the foregoing description of Figs. 1 to 3 for instance.

Fig. 5 is a block diagram of an example data structure that may be used to associate network services with network service user groups. The data structure 110 might be used in a machine-readable medium such as a memory device in which the service registry system 82 or the group/policy store 88 (Fig. 3) is provided. As shown, the example data structure 110 includes a group field 112, a service field 114, and a policy field 116.

The group field 112 stores group information that is indicative of a network service user group. This may include a group name or identifier and/or an identifier of each of one or more group members. Group members may be specified, for example, in the form of partner accounts, user accounts, or both. The group field 112 need not necessarily identify every group member, but may instead include a pointer, group name, or other link to a further data structure in which group members are identified.

Information stored in the service field 114 is indicative of associations between one or more network services and the group. As described in detail above, an association between a network service and a network service user group enables usage of the network service by each member of the network service user group. The service field 114 might include a service name or other identifier and/or service registry information, for instance. As noted above for the group field 112, the service field 114 may include a pointer or link to another data structure, illustratively a record in a service registry, that defines the associated service.

The policy field 116 stores information that is indicative of a group policy for the network service user group. A group policy governs the usage, by each member of the network service user group, of any associated network services. Policy information stored in the policy field 116 may include information that actually defines a group policy, or an identifier of or a link to another data structure or record in which the policy is specified.

Embodiments of the invention may be used to manage multiple network service user groups, network services, and group policies. A record having a format as shown in Fig. 5 might be provided for each network service user group, each group member, or each network service. It should thus be appreciated that the present invention is in no way restricted to the illustrative example shown in Fig. 5. Other embodiments may include further, fewer, or different fields than explicitly shown, in a similar or different order. For instance, where a data record or structure includes group and service fields 112, 114, service/group associations are inherent or implied and need not be explicitly specified. In other embodiments, however, explicit indications of service/group associations may be used.

An enterprise or other provider or network services may implement embodiments of the invention so as to publish web services to multiple distinct partner groups using a single shared infrastructure. An enterprise may also participate in managed service networks with this same infrastructure by peering with an external controller in a managed service operator's network. This allows an enterprise to maintain overall control of multiple self-managed and/or externally managed virtual extranets in a consistent and cost-effective manner.

Currently available products do not allow an enterprise to create and manage multiple virtual extranets with various groups of business partners. Enterprises may thus implement embodiments of the invention to reduce costs of service integration with external corporations and to support much needed agility in adding and altering partner relationships. This can be a tremendous advantage for corporations in fast paced and very competitive markets where flexible and cost-effective partner interactions are desirable. Supply chain management in manufacturing and retail markets are good examples, as illustrated above.

There are also no currently available products that allow an enterprise to participate in both managed service networks and self-managed extranets. The ability to quickly join managed service networks without deploying dedicated infrastructure or altering existing service management schemes can provide a further competitive advantage. Managed service networks could potentially provide access to new markets and customers for an enterprise, and so additional agility in subscribing to managed networks may lead to increased revenue opportunities.

Using the techniques disclosed herein, users can be granted access to network services that they need without requiring any manual action from their own client applications or from a communication network while in transit. Once configured in a specific partner group, users can have seamless access to network services that have been made available to that group.

More generally, embodiments of the invention can be used to provide the complete functionality of a full service SOA infrastructure as follows:
Corporate Governance: provides monitoring, control and reporting to ensure compliance with regulations and supports continued corporate improvement;
Managed Partner Extranet: secured seamless publishing and consumption of web services with partners and branch locations;
Web Service Performance: ensures availability and performance of web services as per corporate requirements or Service Level Agreements (SLAs);
Corporate Agility & Application Sensitivity: provides application-level routing and message translation based on content of SOAP headers, XML tags, or other message content;
Application Security: provides application-level security by ensuring messages are well formed, detecting XML-based attacks and enforcing application data encryption policy;
Life Cycle Management: provides controlled publishing of web services with rollback;
System Features: provides reliability, scalability, and compliance with open standards.

These and other functions have been disclosed herein, and/or in one or more of the above-referenced related patent applications.

What has been described is merely illustrative of the application of principles of embodiments of the invention. Other arrangements and methods can be implemented by those skilled in the art without departing from the scope of the present invention.

For example, discovery is one possible mechanism through which network service consumers can become aware of network services. Embodiments of the present invention may, however, be implemented in conjunction with other types of network service distribution schemes. Potential network service users could be notified of services when they first become available or when they are first associated with a network service user group.

The divisions of function shown in Fig. 3, for instance, are also intended solely for illustrative purposes. Embodiments of the invention may be implemented using further, fewer, or different components than shown.

It should be appreciated that not all of the functions disclosed herein need necessarily be supported in every embodiment. An external service controller might not itself enforce service usage restrictions for instance, and accordingly might not include a service usage control module 90.

In addition, although described primarily in the context of methods and systems, other implementations of the invention are also contemplated, as instructions stored on a machine-readable medium, for example.

## Claims

1. A system (80) comprising:
a group manager (86) operable to manage a plurality of network service user groups, each network service user group comprising at least one member, and to manage associations between network services and the plurality of network service user groups, an association between a network service and a network service user group enabling usage of the network service by each member of the network service user group;
an interface (92) operatively coupled to the group manager (86), the interface (92) enabling configuration of the plurality of network service user groups; and
a memory (88), operatively coupled to the group manager (86) and to the interface (92), for storing information that is indicative of the plurality of network service user groups,
**characterised in that** the memory (88) is further for storing information that is indicative of respective group policies for the plurality of network service user groups, each group policy governing usage, by each member of a network service user group, of network services associated with the network service user group.

2. The system (80) of claim 1, wherein the network services comprise a network service provided by a network service provider system that is within an administrative domain, and wherein the plurality of network service user groups comprises a network service user group including at least one member that is outside the administrative domain.

3. The system (80) of claim 2, implemented within the administrative domain.

4. The system (80) of claim 3, wherein the interface (92) further enables configuration of an externally managed network service user group and associations between the network services and the externally managed network service user group, the system (80) further comprising:
an external interface (94) operatively coupled to the group manager (86) and enabling the group manager (86) to send configuration information to an external group manager (86), implemented outside the administrative domain, that is operable to manage the externally managed network service user group and associations between the network services and the externally managed network service user group.

5. The system (80) of claim 2, implemented in a communication network that is outside the administrative domain and that enables communications between the service provider system and the at least one member that is outside the administrative domain.

6. The system (80) of claim 5, wherein the interface (92) enables configuration of the plurality of network service user groups and further enables configuration of associations between the network services and the plurality of network service user groups by enabling the group manager (86) to receive configuration information from a configuration system in the administrative domain.

7. The system (80) of claim 1, wherein the respective group policies comprise respective sets of at least one of: a network service selection rule, a routing selection rule, and a data privacy rule.

8. The system (80) of claim 1, further comprising:
a network service registry system interface (84) operatively coupled to the group manager (86) and operable to enable the group manager (86) to access a registry system (82), the registry system (82) storing network service information for the network services in a plurality of registries, the plurality of registries comprising respective registries for the plurality of network service user groups,
wherein the group manager (86) is operable to manage the associations between the network services and the plurality of network service user groups by managing the storage of network service information in the plurality of registries.

9. The system (80) of claim 1, further comprising:
a service usage control module(90) operatively coupled to the memory (88) and operable to control usage of the network services in accordance with the group policies.

10. The system (80) of claim 9, wherein the service usage control module (90) is located remotely from the group manager.

11. A method (100) comprising:
establishing (102) a plurality of network service user groups, each network service user group comprising at least one member; and
configuring (104) associations between network services and the plurality of network service user groups, an association between a network service and a network service user group enabling usage of the network service by each member of the network service user group,
the method (100) being **characterised by** further comprising:
establishing respective group policies for the plurality of network service user groups, each group policy governing usage, by each member of a network service user group, of network services associated with the network service user group.

12. The method (100) of claim 11, wherein the network services comprise a network service provided by a network service provider system that is within an administrative domain, and wherein the plurality of network service user groups comprises a network service user group including at least one member that is outside the administrative domain.

13. The method (100) of claim 11, wherein the service provider system communicates with the at least one member that is outside the administrative domain via a communication network that is outside the administrative domain, and wherein establishing comprises receiving configuration information from a configuration system in the administrative domain.

14. The method (100) of any one of claim 11 to 13, wherein configuring comprises:
controlling storage of network service information for the network services in a plurality of registries, the plurality of registries comprising respective registries for the plurality of network service user groups.

15. The method (100) of claim 11, further comprising:
controlling (106) usage of the network services in accordance with the group policies.

16. The method (100) of claim 11, implemented within an administrative domain, the method (100) further comprising:
establishing an externally managed network service user group;
configuring associations between the network services and the externally managed network service user group; and
sending, to an external group management system that is implemented outside the administrative domain, information that is indicative of the externally managed network service user group and information that is indicative of the associations between the network services and the externally managed network service user group.

17. A machine-readable medium storing instructions which when executed on a computer perform all the steps of the method (100) of claim 16 or any one of claims 11 to 13.

## Patentansprüche

1. System (80), umfassend:
Einen Gruppenverwalter (86), betreibbar, um eine Vielzahl von Netzwerkdienst-Benutzergruppen zu verwalten, wobei jede Netzwerkdienst-Benutzergruppe mindestens ein Mitglied umfasst, und um Assoziationen zwischen Netzwerkdiensten und der Vielzahl von Netzwerkdienst-Benutzergruppen zu verwalten, wobei eine Assoziation zwischen einem Netzwerkdienst und einer Netzwerkdienst-Benutzergruppe die Nutzung des Netzwerkdienstes durch jedes Mitglied der Netzwerkdienst-Benutzergruppe ermöglicht;
eine Schnittstelle (92), operativ an den Gruppenverwalter (86) gekoppelt, wobei die Schnittstelle (92) das Konfigurieren der Vielzahl von Netzwerkdienst-Benutzergruppen ermöglicht; und
einen Speicher (88), operativ an den Gruppenverwalter (86) und an die Schnittstelle (92) gekoppelt, zum Speichern von Informationen, die für die Vielzahl von Netzwerkdienst-Benutzergruppen indikativ sind,
**dadurch gekennzeichnet, dass** der Speicher (88) weiterhin für das Speichern von Informationen, die für die entsprechenden Gruppenrichtlinien für die Vielzahl von Netzwerkdienst-Benutzergruppen indikativ sind, bestimmt ist, wobei jede Gruppenrichtlinie die Nutzung, durch jedes Mitglied einer Netzwerkdienst-Benutzergruppe, von mit der Netzwerkdienst-Benutzergruppe assoziierten Netzwerkdiensten regelt.

2. System (80) nach Anspruch 1, wobei die Netzwerkdienste einen Netzwerkdienst umfassen, der von einem Netzwerkdienstanbieter-System, welches sich innerhalb einer administrativen Domain befindet, bereitgestellt wird, und wobei die Vielzahl von Netzwerkdienst-Benutzergruppen eine Netzwerkdienst-Benutzergruppe umfasst, die mindestens ein Mitglied, welches sicher außerhalb der administrativen Domain befindet, einschließt.

3. System (80) nach Anspruch 2, innerhalb der administrativen Domain implementiert.

4. System (80) nach Anspruch 3, wobei die Schnittstelle (92) weiterhin das Konfigurieren einer extern verwalteten Netzwerkdienst-Benutzergruppe und von Assoziationen zwischen den Netzwerkdiensten und der extern verwalteten Netzwerkdienst-Benutzergruppe ermöglicht, wobei das System (80) weiterhin umfasst:
Eine externe Schnittstelle (94), welche operativ an den Gruppenverwalter (86) gekoppelt ist und es dem Gruppenverwalter (86) ermöglicht, Konfigurationsinformationen an einen externen Gruppenverwalter (86) zu senden, welcher außerhalb der administrativen Domain implementiert wird und betriebsfähig ist, um die extern verwaltete Netzwerkdienst-Benutzergruppe und die Assoziationen zwischen den Netzwerkdiensten und der extern verwalteten Netzwerkdienst-Benutzergruppe zu verwalten.

5. System (80) nach Anspruch 2, implementiert in einem Kommunikationsnetzwerk, welches sich außerhalb der administrativen Domain befindet und Kommunikationen zwischen dem Dienstanbieter-System und dem mindestens einen Mitglied, welches sich außerhalb der administrativen Domain befindet, ermöglicht.

6. System (80) nach Anspruch 5, wobei die Schnittstelle (92) das Konfigurieren der Vielzahl von Netzwerkdienst-Benutzergruppen ermöglicht, und weiterhin das Konfigurieren von Assoziationen zwischen den Netzwerkdiensten und der Vielzahl von Netzwerkdienst-Benutzergruppen ermöglicht, indem sie es dem Gruppenverwalter (86) ermöglicht, Konfigurationsinformationen von einem Konfigurationssystem in der administrativen Domain zu empfangen.

7. System (80) nach Anspruch 1, wobei die entsprechenden Gruppenrichtlinien jeweilige Sätze von mindestens entweder: einer Netzwerkdienstauswahlregel, einer Leitwegauswahlregel oder einer Datenschutzregel umfassen.

8. System (80) nach Anspruch 1, weiterhin umfassend:
Eine Netzwerkdienst-Registersystemschnittstelle (84), welche operativ an den Gruppenverwalter (86) gekoppelt und betreibbar ist, um es dem Gruppenverwalter (86) zu ermöglichen, auf ein Registersystem (82) zuzugreifen, wobei das Registersystem (82) Netzwerkdienstinformationen für die Netzwerkdienste in einer Vielzahl von Registern speichert, wobei die Vielzahl von Registern jeweilige Register für die Vielzahl von Netzwerkdienst-Benutzergruppen umfasst,
wobei der Gruppenverwalter (86) betreibbar ist, um die Assoziationen zwischen den Netzwerkdiensten und der Vielzahl von Netzwerkdienst-Benutzergruppen zu verwalten, indem er die Speicherung von Netzwerkdienstinformationen in der Vielzahl von Registern verwaltet.

9. System (80) nach Anspruch 1, weiterhin umfassend:
Ein Dienstnutzungssteuerungsmodul (90), welches operativ an den Speicher (88) gekoppelt und betreibbar ist, um die Nutzung der Netzwerkdienste gemäß den Gruppenrichtlinien zu steuern.

10. System (80) nach Anspruch 9, wobei das Dienstnutzungssteuerungsmodul (90) vom Gruppenverwalter entfernt angeordnet ist.

11. Verfahren (100), umfassend:
Erstellen (102) einer Vielzahl von Netzwerkdienst-Benutzergruppen, wobei jede Netzwerkdienst-Benutzergruppe mindestens ein Mitglied umfasst; und
Konfigurieren (104) von Assoziationen zwischen Netzwerkdiensten und der Vielzahl von Netzwerkdienst-Benutzergruppen, wobei eine Assoziation zwischen einem Netzwerkdienst und einer Netzwerkdienst-Benutzergruppe die Nutzung des Netzwerkdienstes durch jedes Mitglied der Netzwerkdienst-Benutzergruppe ermöglicht,
wobei das Verfahren (100) **dadurch gekennzeichnet ist, dass** es weiterhin umfasst:
Erstellen von jeweiligen Gruppenrichtlinien für die Vielzahl von Netzwerkdienst-Benutzergruppen, wobei jede Gruppenrichtlinie die Nutzung, durch jedes Mitglied einer Netzwerkdienst-Benutzergruppe, von mit der Netzwerkdienst-Benutzergruppe assoziierten Netzwerkdiensten regelt.

12. Verfahren (100) nach Anspruch 11, wobei die Netzwerkdienste einen Netzwerkdienst umfassen, der von einem Netzwerkdienstanbieter-System, welches sich innerhalb einer administrativen Domain befindet, bereitgestellt wird, und wobei die Vielzahl von Netzwerkdienst-Benutzergruppen eine Netzwerkdienst-Benutzergruppe mit mindestens einem Mitglied, welches sich außerhalb der administrativen Domain befindet, umfasst.

13. Verfahren (100) nach Anspruch 11, wobei das Dienstanbieter-System mit dem mindestens einen Mitglied, welches sich außerhalb der administrativen Domain befindet, über ein Kommunikationsnetzwerk, welches sich außerhalb der administrativen Domain befindet, kommuniziert, und wobei das Erstellen das Empfangen von Konfigurationsinformationen von einem Konfigurationssystem in der administrativen Domain umfasst.

14. Verfahren (100) nach einem beliebigen der Ansprüche 11 bis 13, wobei das Konfigurieren umfasst:
Steuern der Speicherung von Netzwerkdienstinformationen für die Netzwerkdienste in einer Vielzahl von Registern, wobei die Vielzahl von Registern jeweilige Register für die Vielzahl von Netzwerkdienst-Benutzergruppen umfasst.

15. Verfahren (100) nach Anspruch 11, weiterhin umfassend:
Steuern (106) der Nutzung der Netzwerkdienste gemäß den Gruppenrichtlinien.

16. Verfahren (100) nach Anspruch 11, innerhalb einer administrativen Domain implementiert, wobei das Verfahren (100) weiterhin umfasst:
Erstellen einer extern verwalteten Netzwerkdienst-Benutzergruppe;
Konfigurieren von Assoziationen zwischen den Netzwerkdiensten und der extern verwalteten Netzwerkdienst-Benutzergruppe; und
Senden, an ein außerhalb der administrativen Domain implementiertes externes Gruppenverwaltungssystem, von Informationen, welche für die extern verwaltete Netzwerkdienst-Benutzergruppe indikativ sind, und Informationen, welche für die Assoziationen zwischen den Netzwerkdiensten und die extern verwaltete Netzwerkdienst-Benutzergruppe indikativ sind.

17. Maschinenlesbares Medium, welches Befehle speichert, um bei dessen Ausführung auf einem Computer alle Schritte des Verfahrens (100) gemäß Anspruch 16 oder einem beliebigen der Ansprüche 11 bis 13 durchzuführen.

## Revendications

1. Système (80) comprenant :
un gestionnaire de groupe (86) pouvant être utilisé pour gérer une pluralité de groupes d'utilisateurs de services de réseau, chaque groupe d'utilisateurs de services de réseau comprenant au moins un membre, et pour gérer des associations entre les services de réseau et la pluralité de groupes d'utilisateurs de services de réseau, une association entre un service de réseau et un groupe d'utilisateurs de services de réseau permettant l'utilisation du service de réseau par chaque membre du groupe d'utilisateurs de services de réseau ;
une interface (92) couplée de manière opérationnelle au gestionnaire de groupe (86), l'interface (92) permettant la configuration de la pluralité de groupes d'utilisateurs de services de réseau ; et
une mémoire (88) couplée de manière opérationnelle au gestionnaire de groupe (86) et à l'interface (92) pour stocker des informations qui sont indicatives de la pluralité de groupes d'utilisateurs de services de réseau,
**caractérisé en ce que** la mémoire (88) est en outre destinée à stocker des informations qui sont indicatives des politiques de groupe respectives de la pluralité de groupes d'utilisateurs de services de réseau, chaque politique de groupe régissant l'utilisation, par chaque membre d'un groupe d'utilisateurs de services de réseau, des services de réseau associés au groupe d'utilisateurs de services de réseau.

2. Système (80) selon la revendication 1, dans lequel les services de réseau comprennent un service de réseau fourni par un système fournisseur de services de réseau qui se trouve à l'intérieur d'un domaine administratif, et dans lequel la pluralité de groupes d'utilisateurs de services de réseau comprend un groupe d'utilisateurs de services de réseau incluant au moins un membre qui se trouve en dehors du domaine administratif.

3. Système (80) selon la revendication 2, mis en oeuvre au sein du domaine administratif.

4. Système (80) selon la revendication 3, dans lequel l'interface (92) permet en outre la configuration d'un groupe d'utilisateurs de services de réseau géré depuis l'extérieur et des associations entre les services de réseau et le groupe d'utilisateurs de services de réseau géré depuis l'extérieur, le système (80) comprenant en outre :
une interface externe (94) couplée de manière opérationnelle au gestionnaire de groupe (86) et permettant au gestionnaire de groupe (86) d'envoyer des informations de configuration à un gestionnaire de groupe externe (86), mis en oeuvre en dehors du domaine administratif, qui peut être utilisé pour gérer le groupe d'utilisateurs de services de réseau géré depuis l'extérieur et les associations entre les services de réseau et le groupe d'utilisateurs de services de réseau géré depuis l'extérieur.

5. Système (80) selon la revendication 2, mis en oeuvre dans un réseau de communication qui se trouve en dehors du domaine administratif et qui permet des communications entre le système fournisseur de services et l'au moins un membre qui se trouve en dehors du domaine administratif.

6. Système (80) selon la revendication 5, dans lequel l'interface (92) permet la configuration de la pluralité de groupes d'utilisateurs de services de réseau et permet en outre la configuration d'associations entre les services de réseau et la pluralité de groupes d'utilisateurs de services de réseau en permettant au gestionnaire de groupe (86) de recevoir des informations de configuration de la part d'un système de configuration dans le domaine administratif.

7. Système (80) selon la revendication 1, dans lequel les politiques de groupe respectives comprenant des ensembles respectifs d'au moins une règle parmi les suivantes : une règle de sélection de service de réseau, une règle de sélection de routage ou une règle de confidentialité des données.

8. Système (80) selon la revendication 1, comprenant en outre :
une interface (84) de système d'enregistrement de service de réseau couplée de manière opérationnelle au gestionnaire de groupe (86) et pouvant être utilisée pour permettre au gestionnaire de groupe (86) d'accéder à un système de registre (82), le système de registre (82) stockant des informations de service de réseau pour les services de réseau dans une pluralité de registres, la pluralité de registres comprenant des registres respectifs pour la pluralité de groupes d'utilisateurs de services de réseau,
dans lequel le gestionnaire de groupe (86) peut être utilisé pour gérer les associations entre les services de réseau et la pluralité de groupes d'utilisateurs de services de réseau en gérant le stockage des informations de service de réseau dans la pluralité de registres.

9. Système (80) selon la revendication 1, comprenant en outre :
un module de commande d'utilisation de service (90) couplé de manière opérationnelle à la mémoire (88) et pouvant être utilisé pour commander l'utilisation des services de réseau conformément aux politiques de groupe.

10. Système (80) selon la revendication 9, dans lequel le module de commande d'utilisation de service (90) est situé à distance du gestionnaire de groupe.

11. Procédé (100) comprenant :
établissement (102) d'une pluralité de groupes d'utilisateurs de services de réseau, chaque groupe d'utilisateurs de services de réseau comprenant au moins un membre ; et
configuration (104) d'associations entre les services de réseau et la pluralité de groupes d'utilisateurs de services de réseau, une association entre un service de réseau et un groupe d'utilisateurs de services de réseau permettant l'utilisation du service de réseau par chaque membre du groupe d'utilisateurs de services de réseau,
le procédé (100) étant **caractérisé en ce qu'**il comprend en outre :
établissement des politiques de groupe respectives pour la pluralité de groupes d'utilisateurs de services de réseau, chaque politique de groupe régissant l'utilisation, par chaque membre d'un groupe d'utilisateurs de services de réseau, des services de réseau associés au groupe d'utilisateurs de services de réseau.

12. Procédé (100) selon la revendication 11, selon lequel les services de réseau comprennent un service de réseau fourni par un système fournisseur de service de réseau qui se trouve à l'intérieur d'un domaine administratif, et selon lequel la pluralité de groupes d'utilisateurs de services de réseau comprend un groupe d'utilisateurs de services de réseau incluant au moins un membre qui se trouve en dehors du domaine administratif.

13. Procédé (100) selon la revendication 11, selon lequel le système fournisseur de service communique avec l'au moins un membre qui se trouve en dehors du domaine administratif par le biais d'un réseau de communication qui se trouve en dehors du domaine administratif, et selon lequel l'établissement comprend la réception d'informations de configuration de la part d'un système de configuration dans le domaine administratif.

14. Procédé (100) selon l'une quelconque des revendications 11 à 13, selon lequel la configuration comprend :
commande du stockage des informations de service de réseau pour les services de réseau dans une pluralité de registres, la pluralité de registres comprenant des registres respectifs pour la pluralité de groupes d'utilisateurs de services de réseau.

15. Procédé (100) selon la revendication 11, comprenant en outre :
commande (106) de l'utilisation des services de réseau conformément aux politiques de groupe.

16. Procédé (100) selon la revendication 11, mis en oeuvre au sein d'un domaine administratif, le procédé (100) comprenant en outre :
établissement d'un groupe d'utilisateurs de services de réseau géré depuis l'extérieur ;
configuration d'associations entre les services de réseau et le groupe d'utilisateurs de services de réseau géré depuis l'extérieur ; et
envoi, à un système de gestion de groupe externe qui est mis en oeuvre en dehors du domaine administratif, d'informations qui sont indicatives du groupe d'utilisateurs de services de réseau géré depuis l'extérieur et d'informations qui sont indicatives des associations entre les services de réseau et le groupe d'utilisateurs de services de réseau géré depuis l'extérieur.

17. Support pouvant être lu par une machine et stockant des instructions qui, lorsqu'elles sont exécutées sur un ordinateur, réalisent toutes les étapes du procédé (100) selon la revendication 16 ou l'une quelconque des revendications 11 à 13.
